# EUROPÄISCHE PATENTSCHRIFT

(11) **EP 0 481 199 B1**
(45) Veröffentlichungstag und Bekanntmachung des Hinweises auf die Patenterteilung: **10.07.1996**
(21) Anmeldenummer: 91114402.0
(22) Anmeldetag: 28.08.1991
(51) Int. Cl.: B62D 13/04, B62D 13/06

(54) **Sperrvorrichtung für Lenkachsen**
Locking device for steering axles
Dispositif de blocage pour essieux directeurs

(30) Priorität: 13.10.1990 DE 4032549
(43) Veröffentlichungstag der Anmeldung: 22.04.1992
(73) Patentinhaber: BPW Bergische Achsen Kommanditgesellschaft, D-51674 Wiehl (DE)
(72) Erfinder: Steiner, Helmut, W-5276 Wiehl 1 (DE)
(74) Vertreter: Stenger, Watzke & Ring Patentanwälte

(56) Entgegenhaltungen:
- EP-A- 0 303 204
- AU-B- 2 743 367
- DE-A- 3 616 998
- DE-A- 3 616 998

## Beschreibung

Die Erfindung betrifft eine Lenkachse für Fahrzeuganhänger mit über Lenklager und Lenkschenkel an einem Achskörper angelenkten Rädern, welche über Lenkhebel und eine Spurstange verbunden sind, einer Stabilisierungseinrichtung, welche die Räder bei einem Übergang aus einer Kurven- in eine Geradeausfahrt einspurt, und mit einer Sperrvorrichtung, welche die Räder bei Rückwärtsfahrt in Geradeausstellung sperrt.

Sperrvorrichtungen der vorstehend bezeichneten Gattung sind in verschiedenen Ausführungsformen für Lenkachsen von Fahrzeuganhängern bekannt. Beispielsweise ist aus der DE-OS 36 16 998 eine Nachlauflenkachse für Fahrzeuganhänger bekannt, bei der die Räder über Lenkschenkel an einem Achskörper angelenkt sind und über Lenkhebel und eine Spurstange miteinander in Verbindung stehen und bei der eine Stabilisierungseinrichtung vorgesehen ist. Bei dieser bekannten Nachlauflenkachse sind zwischen den Lenkschenkeln und dem Achskörper Drucklager angeordnet, die aus einer am Achskörper befestigten oberen Druckscheibe und am Lenkschenkel befestigten unteren Druckscheibe mit wellenförmigen Gleitflächen bestehen. Diese Drucklager haben die Aufgabe, die bei einer Kurvenfahrt eingelenkten Räder beim Übergang in die Geradeausfahrt wieder einzuspuren. Ferner sollen diese Drucklager verhindern, daß die Räder bei Geradeausfahrt und bei geringer Achslast, also insbesondere bei Leerfahrt in ihrer Ausgangslage festgehalten werden.

Für das Rangieren bei Rückwärtsfahrt muß die Nachlauflenkachse arretiert werden. Hierzu ist aus der DE-OS 36 16 998 eine Sperrvorrichtung bekannt, die aus einer Fixierung zwischen dem Achskörper und der Spurstange besteht, welche eine am Achskörper befestigte Sperrplatte und einen Sperrzylinder aufweist, der mit einer an der Spurstange befestigten Sperrplatte zusammenwirkt. Bei dieser vorbekannten Sperrvorrichtung muß die Nachlauflenkachse vor der Rückwärtsfahrt in ihre Ausgangslage gebracht werden und anschließend der Sperrzylinder in die an der Spurstange befestigte Sperrplatte gedrückt werden.

Eine derartige Arretierung kann manuell, pneumatisch oder hydraulisch betätigt werden. Die hydraulische bzw. pneumatische Betätigung wird durch die an der Zugmaschine angeordneten Hydraulik- oder Pneumatikaggregate geschaltet. Hierzu muß der Fahrer einen im Fahrerhaus der Zugmaschine angeordneten Schalter betätigen.

Um unnötige Stillstandszeiten der Zugmaschine während der Beund Entladezeiten der Fahrzeuganhänger zu vermeiden, sollen die Zugmaschinen mit verschiedenen Fahrzeuganhängern kombinierbar sein. Da jedoch die Sperrvorrichtungen der Nachlauflenkachsen von Fahrzeuganhängern, sowie deren hydraulische oder pneumatische Betätigungen unterschiedlich ausgebildet sind, besteht das Problem, daß die Zugfahrzeuge nicht mit beliebigen Fahrzeuganhängern kombiniert werden können.

Es ist ferner aus der DE-AS 16 30 167 ein Dreiachsanhänger mit einer Nachlauf-Lenkachse bekannt, die in der Stellung für Geradeausfahrt (Vorwärts- oder Rückwärtsfahrt) arretierbar ist. Die Arretierung dieser vorbekannten Nachlauf-Lenkachse erfolgt mittels eines am Achskörper schwenkbar gelagerten Arretierhebels, der in ein an der Spurstange befestigtes Arretierblech einrastet. Die Arretierung ist mittels eines zwischen dem Rahmen des Anhängers und einem Teil der gelenkten Vorderachse angeordneten Schaltkontaktes lösbar, welcher bei einer Auslenkung der Vorderachse von mehr als 3° anspricht.

Eine weitere Nachlauf-Lenkachse für Fahrzeuganhänger mit einer gattungsgemäßen Sperrvorrichtung ist aus der DE-AS 18 10 261 bekannt. Bei dieser Nachlauf-Lenkachse wird eine Spurstange in bekannter Weise, vorzugsweise für Rückwärtsfahrt, durch eine Verriegelung in der Grundstellung kraft- und formschlüssig festgestellt.

Es ist ferner aus der Literaturstelle "Wabco: Antiblockiersysteme ABS für Anhängerfahrzeuge, Druckzeichen: Wabcodruck 815 00 085 3/1.90" bekannt, an mindestens einem Anhängerad einen mitdrehenden Impulsgeber und an dem Achskörper einen feststehenden Impulsempfänger anzuordnen. Schließlich ist es aus der DE-OS 39 09 907 bekannt, daß Sensoren (Impulsgeber/Impulsempfänger für Antiblockiersysteme oder Antischlupfregelungen mit relativ geringem technischen Aufwand für Steuerlogiken verwenbar sind. Insbesondere ist es aus dieser Druckschrift bekannt, derartige Sensoren zur Steuerung der Feststellbremse eines Kraftfahrzeuges zu verwenden.

Desweiteren ist aus der EP-A-0 303 204 eine selbstlenkende Fahrzeugachse bekannt, deren Räder beim Übergang von der Vorwärtsfahrt zur Rückwärtsfahrt in eine besondere Rückfahrtstellung verstellbar sind, wobei der Übergang von der Vorwärtsfahrt zur Rückwärtsfahrt von einer Sensoreinheit registriert und das von dieser Einheit erzeugte elektrische Signal verwendet wird, um die Stellung der Räder zu bewirken. Bei dieser bekannten Selbstlenkerachse wird die Lenkbewegung der Räder durch an den Außenenden des Achskörpers angeordnete Achsbolzen ermöglicht. Zum Umstellen von der Vorwärtsfahrtbewegung auf die Rückwärtsfahrtbewegung sind die Achsbolzen drehbeweglich so an dem Achskörper befestigt, daß sie in Geradeausfahrt nach vorne-unten weisen und bei Rückwärtsfahrt nach hinten-unten weisen. Das Umstellen der Achsbolzen kann dabei dadurch ausgelöst werden, daß ein an einem Rad befestigter Empfänger die Drehrichtung des Rades registriert und ein angeschlossenes Sensorsystem - nur bei Rückwärtsfahrt - ein elektrisches Signal erzeugt, wodurch wiederum ein Relais und ein Magnetventil aktiviert werden, die die Umstellung der Achsbolzen bewirken. Eine Sperrung der Lenkachse ist bei dieser bekannten selbstlenkenden Fahrzeugachse jedoch nicht vorgesehen.

Ausgehend von diesem Stand der Technik liegt der Erfindung die **Aufgabe** zugrunde, eine einfache Lenkachse zu schaffen, die eine selbständige Sperrvorrichtung aufweist, welche die Lenkachse bei Rückwärtsfahrt unabhängig vom Zugfahrzeug in Geradeausfahrt arretiert.

Die technische **Lösung** dieser Aufgabe durch die Erfindung ist dadurch gekennzeichnet, daß an mindestens einem Rad ein mitdrehender Impulsgeber und an dem Achskörper ein feststehender Impulsempfänger angeordnet sind, wobei der Impulsempfänger aus zwei Sensoren besteht und der Impulsgeber ein Polrad mit in gleichmäßigen Abständen auf der umlaufenden Stirnfläche angeordneten Erhebungen ist, welches am Nabenende des Rades angeordnet ist und das dem Impulsempfänger ein Drehrichtungsmelder nachgeschaltet ist, der die Drehrichtungsimpulse aufnimmt und in Sperr- oder Lösesignale für die Sperrvorrichtung umwandelt.

Die erfindungsgemäße Sperrvorrichtung wird durch eine am Fahrzeuganhänger angeordnete Schaltung bei Rückwärtsfahrt eingelegt, wodurch die Lenkachse in Geradeausstellung gesperrt wird. Hierzu wird die Drehrichtung der Räder der Lenkachse in ein Signal umgewandelt, welches von dem Drehrichtungsmelder aufgenommen wird. Stellt der Drehrichtungsmelder fest, daß der Fahrzeuganhänger rückwärts geschoben wird, so betätigt der Drehrichtungsmelder die Sperrvorrichtung, welche die Lenkachse in Geradeausstellung arretiert. Die Lenkachse ist demgemäß unabhängig von dem Hydraulik- oder Druckluftsystem des Zugfahrzeuges bzw. einer manuellen Betätigung bei Rückwärtsfahrt arretierbar.

Die Impulsübertragung zwischen dem Impulsgeber und dem Impulsempfänger erfolgt berührungslos. Hierbei ist der Impulsgeber als ein am Nabenende des Rades angeordnetes Polrad ausgebildet, so daß keine aneinanderreibenden Teile vorhanden sind, die einem Verschleiß und damit der regelmäßigen Wartung unterworfen sind. Ferner sind die berührungslosen, vorzugsweise elektromagnetischen Impulsübertragungen rückwirkungsfrei und bieten eine hohe Sensibilität, die eine sichere Auslösung der Sperrvorrichtung ermöglichen.

Der Impulsempfänger besteht aus zwei Sensoren, die mit dem als Polrad, mit in gleichmäßigen Abständen auf der umlaufenden Stirnfläche angeordneten Erhebungen ausgebildeten Impulsgeber korrespondieren. Die Sensoren sind in Umfangsrichtung des Polrades nebeneinander in einem staub- und wasserdichten Gehäuse angeordnet. Durch diese Ausgestaltung sind die Sensoren vor Wasser-, Staub-, Temperatureinflüssen sowie Beschädigungen gesichert. Bei dieser Ausgestaltung ist es besonders vorteilhaft, daß die Drehrichtung des Rades in einfacher Weise gemessen werden kann.

Der Drehrichtungsmelder besteht vorzugsweise aus einem Mikrocomputer, an den die von den Sensoren aufgenommenen und in elektrische Signale umgewandelten Impulse übermittelt werden.

Bei dieser Ausgestaltung ist es vorteilhaft, daß die Impulse zum Drehrichtungsmelder mit einfachen, unempfindlichen Kabeln übertragbar sind.

Bei einer Weiterentwicklung der erfindungsgemäßen Sperrvorrichtung ist vorgesehen, daß der Sperrzylinder über ein von dem Drehrichtungsmelder geschaltetes Magnetventil betätigbar ist und in eine an der Spurstange angeordnete, eine Ausnehmung aufweisende Sperrplatte einrückbar ist. Diese Ausgestaltung hat den Vorteil, daß ein am Fahrzeuganhänger angeordnetes Druckluftbremssystem zur Steuerung der Sperrvorrichtung benutzt werden kann und daß die Arretierung der Lenkachse mit einfachen Mitteln erzielt wird.

Eine Verbesserung der Arretierung zwischen Spurstange und Achskörper wird dadurch erzielt, daß die Ausnehmung annähernd rechteckig ausgebildet ist und daß in die Ausnehmung ein am Ende der Zylinderstange angeordneter und korrespondierend ausgebildeter Sperrkopf einrückbar ist. Diese formschlüssige Arretierung weist ausreichend große Flächen an der Ausnehmung und dem Sperrkopf auf. Diese großen Flächen sind zur Verringerung der Flächenpressung notwendig, die durch die von den Rädern auf den Achskörper der Lenkachse übertragenen Axialkräfte verursacht werden.

Weitere Einzelheiten und Vorteile ergeben sich aus der nachfolgenden Beschreibung der zugehörigen Zeichnungen, in denen eine bevorzugte Ausführungsform einer erfindungsgemäßen Sperrvorrichtung schematisch dargestellt worden ist. In den Zeichnungen zeigen:

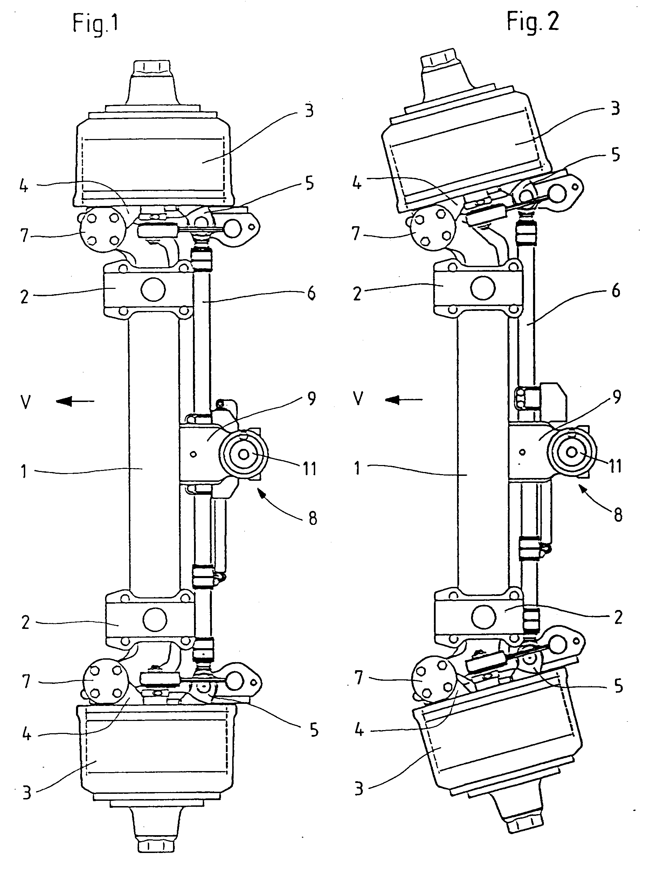

- Fig. 1: eine Lenkachse bei Geradeausfahrt in Draufsicht;
- Fig. 2: dieselbe Lenkachse bei Kurvenfahrt in Draufsicht;

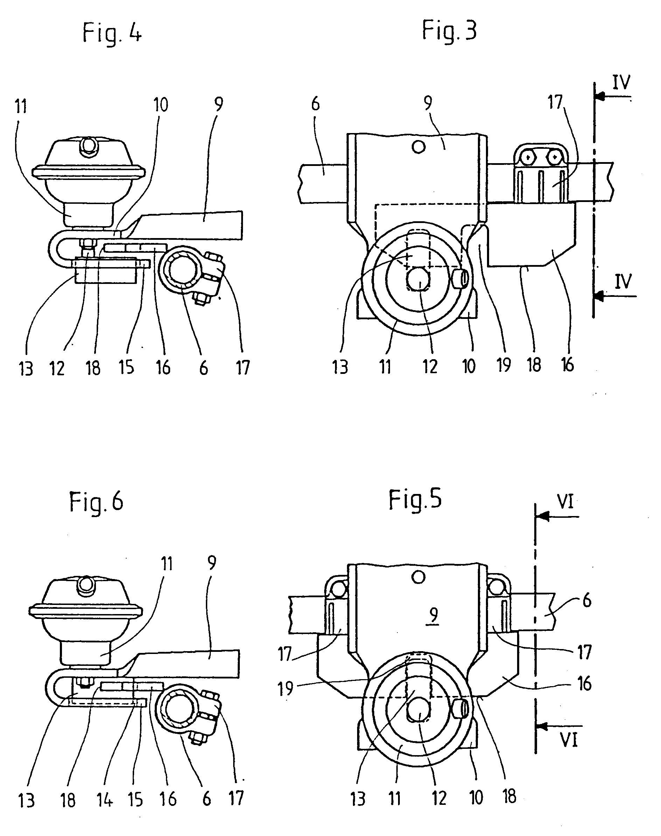

- Fig. 3: eine Sperrvorrichtung in entriegelter Stellung in Draufsicht;
- Fig. 4: die Sperrvorrichtung in entriegelter Stellung entlang der Linie IV-IV in Fig. 3 geschnitten;
- Fig. 5: die Sperrvorrichtung in verriegelter Stellung in Draufsicht;
- Fig. 6: die Sperrvorrichtung in verriegelter Stellung entlang der Linie VI-VI in Fig. 5 geschnitten;
- Fig. 7: einen Impulsgeber und einen Impulsempfänger in Seitenansicht;
- Fig. 8: den Impulsgeber und den Impulsempfänger gemäß Fig. 7 in Draufsicht und

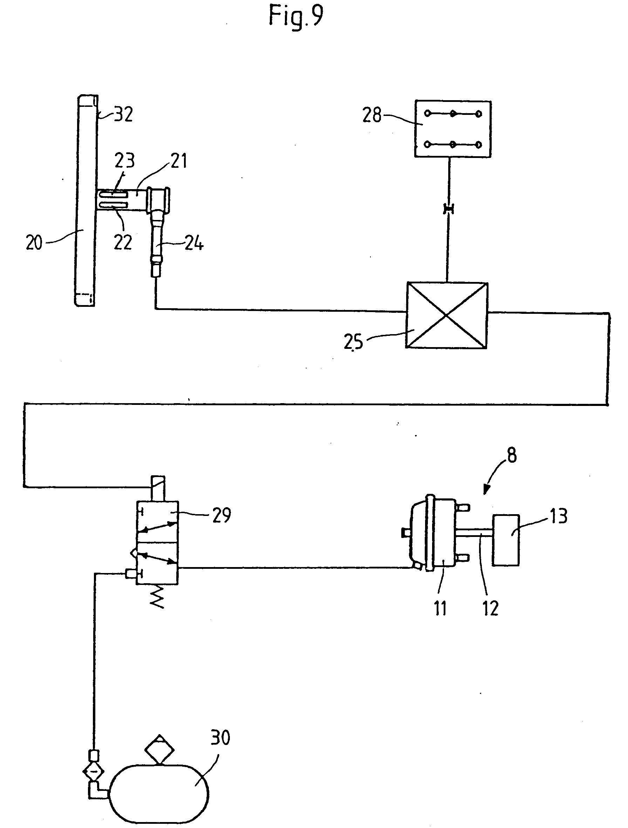

- Fig. 9: einen Schaltplan für den Steuerkreislauf der Sperrvorrichtung.

Eine Lenkachse besteht aus einem Achskörper 1 mit in Fahrtrichtung bei Vorwärtsfahrt V nach vorne abgekröpften Enden, mit Federkonsolen 2, Rädern 3, die mit Lenkschenkeln 4 am Achskörper 1 angelenkt sind und über mit den Lenkschenkeln 4 verbundene Lenkhebel 5 und eine Spurstange 6 miteinander in Verbindung stehen.

Die Drehachse eines Lenkschenkels 4 am Achskörper 1 wird durch ein Lenklager 7 definiert.

An dem Achskörper 1 ist rückseitig eine Sperrvorrichtung 8 befestigt, die eine horizontal am Achskörper angeschweißte Platte 9 aufweist. Die Platte 9 ist an ihrem dem Achskörper 1 abgewandten Ende U-förmig ausgebildet. Auf einem Schenkel 10 der Platte 9 ist ein druckluftbetätigter Sperrzylinder 11 befestigt, der mit seiner Zylinderstange 12 durch eine in dem Schenkel 10 angeordnete Bohrung greift und an dessen Ende ein quaderförmig ausgebildeter Sperrkopf 13 befestigt ist. Der Sperrkopf 13 ist in einer Ausnehmung 14 geführt, die in einem zweiten Schenkel 15 der U-förmigen Platte 9 angeordnet ist.

Zwischen den beiden Schenkeln 10 und 15 ist eine Sperrplatte 16 verschiebbar angeordnet, die mit Spannhülsen 17 an der Spurstange 6 angeschraubt ist. Die Sperrplatte 16 ist annähernd rechteckig ausgebildet und weist an ihrer der Spurstange 6 abgewandten Kante 18 eine U-förmige Ausnehmung 19 auf. Die Ausnehmung 19 ist in der Mitte der Sperrplatte 16 angeordnet und hat eine dem Sperrkopf 13 entsprechende Form.

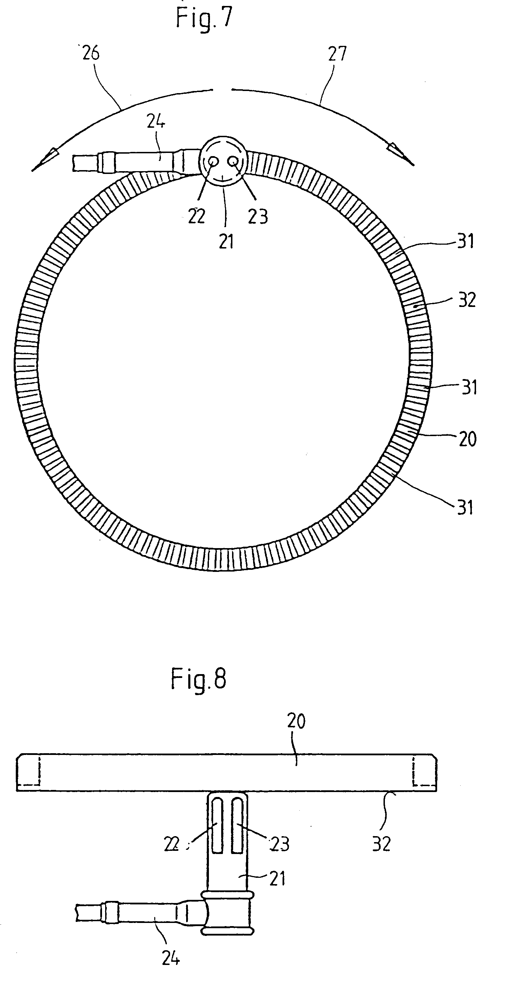

In den Rädern 3 ist jeweils ein als Polrad 20 ausgebildeter Impulsgeber angeordnet. Das Polrad 20 ist am Nabenende eines Rades 3 befestigt und läuft mit dem Rad 3 um. Gegenüber dem oberen Umkehrpunkt des Polrades 20 ist ein Gehäuse 21 angeordnet, in dem zwei Sensoren 22 und 23 als Impulsempfänger angeordnet sind. Die Sensoren 22, 23 haben eine unterschiedliche Kennung. Der Sensor 23 hat die Kennung A und der Sensor 22 hat die Kennung B. Die Sensoren 22 und 23 sind über ein Kabel 24 mit einem Drehrichtungsmelder 25 verbunden. In Abhängigkeit von der Drehrichtung des Rades 3 und des Polrades 20 werden die von den Sensoren 22 und 23 aufgenommenen Impulse in elektrische Signale umgewandelt und dem Drehrichtungsmelder übermittelt. Dreht sich das Polrad 20 in die durch einen Pfeil 26 angedeutete Drehrichtung, die der Vorwärtsfahrt entspricht, so wird durch die Sensoren 23 und 22 die Impulsfolge AB aufgenommen und in ein entsprechendes elektrisches Signal umgewandelt, welches dem Drehrichtungsmelder 25 zugeführt wird. Dreht sich das Polrad 20 in Richtung eines in Fig. 7 die Rückwärtsfahrt anzeigenden Pfeiles 27, so übermitteln die Sensoren 22 und 23 eine Impulsfolge BA an den Drehrichtungsmelder 25.

Die Impulsübertragung zwischen dem Polrad 20 und den Sensoren 22 und 23 erfolgt auf elektromagnetischem Wege. Das Polrad 20 hat mehrere in gleichmäßigem Abstand auf der umlaufenden Stirnfläche 32 angeordnete Erhebungen 31, welche bei der Drehung des Polrades einen elektromagnetischen Impuls in den Sensoren 22 und 23 erzeugen.

Der als Mikrocomputer ausgebildete Drehrichtungsmelder, der von einer Batterie 28 mit Energie versorgt wird, entschlüsselt die elektrischen Signale der Sensoren 22 und 23. Erhält der Drehrichtungsmelder eine der Rückwärtsfahrt entsprechende Signalkombination BA, so schaltet er ein Magnetventil 29, so daß der Sperrzylinder 11 mit Druckluft aus einem Druckluftspeicher 30 beaufschlagt wird. Die Druckluft drückt die Zylinderstange 12 in den Sperrzylinder 11, so daß der Sperrkopf 13 in die Ausnehmung 19 gezogen wird. Die Spurstange 6 ist in dieser Stellung arretiert, so daß die Lenkachse bei Rückwärtsfahrt nicht mehr einlenken kann. Voraussetzung für die Arretierung der Lenkachse ist, daß sie sich am Anfang der Rückwärtsfahrt in Geradeausstellung befindet. Deshalb muß der Anhänger vor einer Arretierung vorwärts gefahren werden.

Erhält der Drehrichtungsmelder 25 bei erneuter Vorwärtsfahrt die Signalkombination AB, so schaltet er das Magnetventil 29 derart um, daß der Sperrzylinder 11 den Sperrkopf 13 aus der Ausnehmung 19 herausdrückt. Dies kann entweder durch eine Druckluftbeaufschlagung der Kolbenfläche der Zylinderstange 12 oder lediglich durch die Schwerkraft erfolgen. Nunmehr ist die Spurstange 6 wieder relativ zum Achkörper 1 verschiebbar und die Räder 3 lenkbar.

Bei einem mit einem Antiblockier-System ausgerüsteten Fahrzeug ist es sinnvoll, die Polräder für die Messung der Umfangsgeschwindigkeit der Räder auch für die Messung der Drehrichtung zu benutzen und die Sensoren 22 und 23 an diesen Polrädern anzuordnen.

Da die Sensoren und die Kabel innerhalb des Bremsenraumes der Räder 3 angeordnet sind, besteht das Gehäuse 21 aus einem temperaturbeständigen und stoßunempfindlichen Kunststoff. Ferner sind die Sensoren 22 und 23 wasser- und staubdicht von dem Gehäuse 21 umgeben.

## Patentansprüche

1. Lenkachse für Fahrzeuganhänger mit über Lenklager (7) und Lenkschenkel (4) an einem Achskörper (1) angelenkten Rädern (3), welche über Lenkhebel (5) und eine Spurstange (6) verbunden sind, einer Stabilisierungseinrichtung, welche die Räder (3) bei einem Übergang aus einer Kurven- in eine Geradeausfahrt einspurt, und mit einer Sperrvorrichtung (8), welche die Räder (3) bei Rückwärtsfahrt in Geradeausstellung sperrt,
**dadurch gekennzeichnet**,
daß an mindestens einem Rad (3) ein mitdrehender Impulsgeber und an dem Achskörper (1) ein feststehender Impulsempfänger angeordnet sind, wobei der Impulsempfänger aus zwei Sensoren (22, 23) besteht und der Impulsgeber ein Polrad (20) mit in gleichmäßigen Abständen auf der umlaufenden Stirnfläche (32) angeordneten Erhebungen (31) ist, welches am Nabenende des Rades (3) angeordnet ist und
daß dem Impulsempfänger ein Drehrichtungsmelder (25) nachgeschaltet ist, der die Drehrichtungsimpulse aufnimmt und in Sperr- oder Lösesignale für die Sperrvorrichtung (8) umwandelt.

2. Lenkachse nach Anspruch 1, dadurch gekennzeichnet, daß die Sensoren (22, 23) in Umfangsrichtung des Polrades (20) nebeneinander in einem Gehäuse (21) angeordnet sind.

3. Lenkachse nach Anspruch 1, dadurch gekennzeichnet, daß der Drehrichtungsmelder (25) aus einem Mikrocomputer besteht.

4. Lenkachse nach einem der Ansprüche 1 bis 3, dadurch gekennzeichnet, daß ein Sperrzylinder (11) über ein von dem Drehrichtungsmelder (25) geschaltetes Magnetventil (29) betätigbar ist und mit einer Zylinderstange (12) in eine an einer Spurstange (6) angeordnete, eine Ausnehmung (19) aufweisende Sperrplatte (16) einrückbar ist.

5. Lenkachse nach Anspruch 4, dadurch gekennzeichnet, daß die Ausnehmung (19) annähernd rechteckig ausgebildet ist, und daß in die Ausnehmung (19) ein am Ende der Zylinderstange (12) des Sperrzylinders (11) angeordneter und korrespondierend ausgebildeter Sperrkopf (13) einrückbar ist.

## Claims

1. Steering axle for vehicle trailers with wheels (3) which are pivoted to an axle body (1) via steering bearings (7) and steering links (4) and which are connected by steering levers (5) and a track rod (6), with a stabilizing device which aligns the wheels (3) in the case of a transition from cornering to straight-ahead travel, and with a locking device (8) which locks the wheels (3) in the straight-ahead position during reversing, characterized in that a corotating pulse transmitter is arranged on at least one wheel (3) and a fixed pulse receiver is arranged on the axle body (1), the pulse receiver comprising two sensors (22, 23), and the pulse transmitter being a rotor (20) with raised portions (31) arranged at uniform intervals on the revolving front face (32), which rotor is arranged at the hub end of the wheel (3), and in that on its output side the pulse receiver has a rotation direction signalling device (25) which receives the rotation direction pulses and converts them into locking or release signals for the locking device (8).

2. Steering axle according to Claim 1, characterized in that the sensors (22, 23) are arranged adjacent to one another in the circumferential direction of the rotor (20), in a housing (21).

3. Steering axle according to Claim 1, characterized in that the rotation direction signalling device (25) comprises a microcomputer.

4. Steering axle according to one of Claims 1 to 3, characterized in that a locking cylinder (11) can be actuated by means of a solenoid valve (29) switched by the rotation direction signalling device (25) and can be engaged by means of a cylinder rod (12) in a locking plate (16) arranged on a track rod (6) and having a recess (19).

5. Steering axle according to Claim 4, characterized in that the recess (19) is of approximately rectangular design and in that a locking head (13) arranged on the end of the cylinder rod (12) of the locking cylinder (11) and of corresponding design can be engaged in the recess (19).

## Revendications

1. Essieu directeur comprenant des roues (3) articulées sur un corps d'essieu (1) par l'intermédiaire de paliers de direction (7) et de bras de direction (4) et reliées entre elles par des leviers de direction (5) et par une barre de connexion (6), comprenant un dispositif de stabilisation qui redresse les roues (3) lors du passage d'une portion en courbe à une portion en ligne droite, et comprenant un dispositif de blocage (8) qui, en marche arrière, bloque les roues (3) en position droite, caractérisé en ce qu'un générateur d'impulsions entraîné en rotation est monté sur au moins une roue (3) et un récepteur d'impulsions fixe est monté sur le corps d'essieu (1), le récepteur d'impulsions étant constitué de deux capteurs (22, 23) et le générateur d'impulsions étant une roue polaire (20) qui est pourvue de reliefs (31) disposés à intervalles réguliers sur la face frontale tournante (32) et qui est disposée à l'extrémité formant moyeu de la roue (3), et en ce qu'en aval du récepteur d'impulsions est implanté un indicateur de sens de rotation (25) qui reçoit les impulsions de sens de rotation et les convertit en signaux de blocage ou de déblocage pour le dispositif de blocage (8).

2. Essieu directeur selon la revendication 1, caractérisé en ce que les capteurs (22, 23) sont disposés côte à côte dans la direction circonférentielle de la roue polaire (20) à l'intérieur d'un boîtier (21).

3. Essieu directeur selon la revendication 1, caractérisé en ce que l'indicateur de sens de rotation (25) est constitué par un microcalculateur.

4. Essieu directeur selon l'une des revendications 1 à 3, caractérisé en ce qu'un cylindre de blocage (11) peut être actionné par l'intermédiaire d'une électrovanne (29) commutée par l'indicateur de sens de rotation (25) et peut être engagé, au moyen d'une tige cylindrique (12), dans une plaque de blocage (16) disposée sur une barre de connexion (6) et pourvue d'un évidement (19).

5. Essieu directeur selon la revendication 4, caractérisé en ce que l'évidement (19) est sensiblement de forme rectangulaire, et en ce qu'une tête de blocage (13) de forme correspondante située à l'extrémité de la tige cylindrique (12) du cylindre de blocage (11) peut être engagée dans l'évidement (19).
